# EUROPÄISCHE PATENTSCHRIFT

(11) **EP 1 039 182 B1**
(45) Veröffentlichungstag und Bekanntmachung des Hinweises auf die Patenterteilung: **02.06.2004**
(21) Anmeldenummer: 00105863.5
(22) Anmeldetag: 20.03.2000
(51) Int. Cl.: F16J 15/32, F16K 41/00, F15B 13/044

(54) **Dichtvorrichtung und Sitzventil**
Seal device and seat valve
Dispositif d'étanchéité et soupape à siège

(30) Priorität: 23.03.1999 DE 29905323 U
(43) Veröffentlichungstag der Anmeldung: 27.09.2000
(73) Patentinhaber: HAWE Hydraulik GmbH & Co. KG, 81673 München (DE)
(72) Erfinder: Neumair, Georg, Dipl.-Ing. (FH), 85402 Thalhausen (DE)
(74) Vertreter: Grünecker, Kinkeldey, Stockmair & Schwanhäusser Anwaltssozietät

(56) Entgegenhaltungen:
- DE-A- 2 951 232
- DE-A- 3 418 898
- DE-A- 3 835 505
- DE-A- 4 107 083
- GB-A- 2 116 677
- US-A- 3 806 134

## Beschreibung

Die Erfindung betrifft ein Sitzventil gemäß Oberbegriff des Anspruchs 1.

Obwohl bei Dichtvorrichtungen für Ventilstößel beträchtlicher Aufwand getrieben wird, kommt es, beispielsweise bei Sitzventilen für Drücke bis zu 500 Bar oder mehr, häufig zu Leckagen im Austrittsbereich des Ventilstößels nach außen. Der Grund für die Leckagen ist ein Verschleiß oder eine Beschädigung an Teilen der Dichtvorrichtung oder eine zu kurze Standfestigkeit der Dichtvorrichtung aus anderen Gründen.

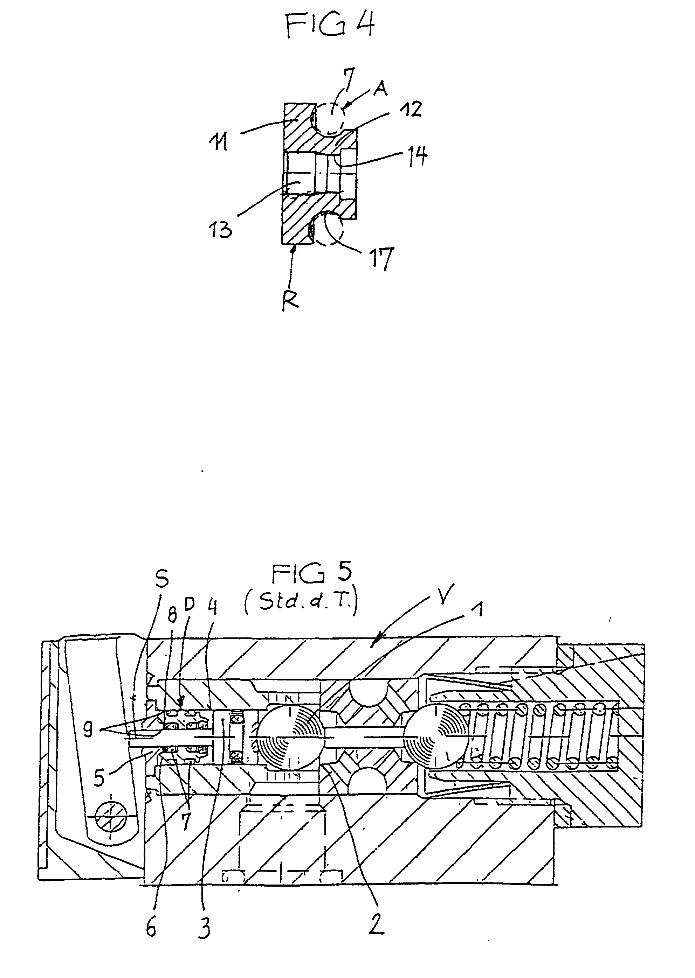

Eine durch Vorbenutzung in der Praxis bekannte Dichtvorrichtung D ist in Fig. 5 in einem Sitzventil V für die Hochdruckhydraulik gezeigt. In einem Gehäuse G ist ein Schließkörper 1 relativ zu einem Ventilsitz 2 verstellbar, und zwar in einer Bewegungsrichtung mittels eines an der Gehäuseaußenseite zugänglichen Ventilstößels S. In dem gezeigten Sitzventil V betätigt der Ventilstößel S den Schließkörper 1 über einen Kolben 3, der in einer Übermaßbohrung 4 mit radial beträchtlichem Spiel verschiebbar geführt ist. Die Übermaßbohrung 4 wird zur Gehäuseaußenseite durch einen vom Ventilstößel S durchsetzten Stopfen 5 verschlossen, der keine Dichtfunktion, sondern allenfalls eine Führungsfunktion hat. In der Übermaßbohrung 4 ist zwischen dem Kolben 3 und dem Stopfen 5 die Dichtvorrichtung D angeordnet. Kritische Spaltbereiche 9 können zwischen der Wand der Übermaßbohrung 4 und der Dichtvorrichtung D und zwischen dem Ventilstößel S und der Dichtvorrichtung D entstehen. Die Dichtvorrichtung D enthält einen Stützring 6 aus Kunststoff oder Metall, der innen- und außenseitig ringförmige Aufnahmen für Dichtringe, z.B. O-Ringe 7 besitzt. Die an der Außenseite angeordneten O-Ringe 7 werden gegen die Wand der Übermaßbohrung 4 angepresst. Die innenseitig platzierten O-Ringe 7 werden gegen den Ventilstößel gepresst, wobei der der drucklosen Seite zugewandte O-Ring 7 noch einen eigenen Stützring 8 besitzt. Es zeigt sich nämlich in der Praxis, dass in den SBereichen 9 herstellungsbedingt und zumindest bereichsweise zwischen 0,01 und 0,02 mm weite Spalte auftreten, und zwar zwischen den metallischen Komponenten oder auch zwischen dem Stützring 6 und der Wand der Übermaßbohrung 4 bzw. zum Ventilstößel S. Unter den gegebenenfalls hohen Drücken werden die O-Ringe 7 in diese Spalte gepresst, wodurch sie allmählich beschädigt werden und ihre Dichtfunktion verlieren. Dieses Fließen der elastischen O-Ringe 7 in die Spalte lässt sich auch bei höchster Herstellpräzision auf Dauer nicht vermeiden.

Bei einer aus DE 34 18 898 A bekannten Dichtvorrichtung wird eine axial bewegliche Kolbenstange durch einen Teflon-Ringkörper in einem relativbeweglichen Dichtkontaktbereich abgedichtet. Der Teflon-Ringkörper weist in Axialrichtung mehrere beabstandete Vorsprünge auf, mit denen der Teflon-Ringkörper auf die Umfangsfläche der Kolbenstange aufgepresst wird. Die Aufpresskraft wird durch einen außen auf dem Teflon-Ringkörper aufliegenden Spannring erzeugt. Die Dichtungsanordnung ist in einer Umfangsnut stationär angeordnet.

Bei einer aus DE 41 07 083 bekannten Dichtvorrichtung für ein Schieberventil wird ein in einer Umfangsnut eines Ventilschiebers positionierter Gleitring radial nach außen durch einen darunterliegenden O-Ring gegen die Umfangsfläche der Ventilbohrung vorgespannt. In diesem Dichtkontaktbereich treten relative Axialbewegungen auf. Der Gleitring ist mit in Umfangsrichtung verlaufenden Steuerkanten versehen.

Bei einer aus US-A-3 806 134 bekannten pneumatischen Dichtvorrichtung zwischen einem Plunger und einer Zylinder-Innenfläche ist in einer Umfangsnut des Plungers ein im Querschnitt L-förmiger Ringkörper aus Teflon mit radialem Spiel positioniert. Der Ringkörper liegt mit einer Abstreiflippe an der Innenfläche an und definiert einen Dichtkontaktbereich, in dem relative Axialbewegungen auftreten. In der Umfangsnut ist neben dem Ringkörper ein O-Ring positioniert, der Leckagen innen um den Ringkörper verhindert.

Bei einer aus GB-A-21 16 677 bekannten Dichtvorrichtung für ein Mehrwege-Schieberventil ist jeweils neben einem in einer Umfangsnut des Ventilschiebers untergebrachten O-Ring ein Abstreifring positioniert.

Weiterer Stand der Technik ist enthalten in DE 38 35 505 A und DE 29 51 232 A.

Der Erfindung liegt die Aufgabe zugrunde, ein Sitzventil der eingangs genannten Art mit dauerhaft zuverlässiger Abdichtung in den beiden Dichtkontaktbereichen zu schaffen.

Die gestellte Aufgabe wird erfindungsgemäß mit den Merkmalen des Anspruchs 1 gelöst.

In dem Sitzventil wird durch den radial durch den O-Ring gegen die Umfangsfläche des Ventilstößels vorgespannten Dichtkragen des Ringkörpers Leckage entlang des Ventilstößels vermieden. Der Außendurchmesser der Ringscheibe des Teflon-Ringkörpers füllt die Übermaßbohrung so aus, dass keine Spaltgefahr für den entlang der Umfangsfläche der Übermaßbohrung abdichtenden O-Ring entsteht. Leckagen des Sitzventils im Bereich des Ventilstößelaustritts werden dauerhaft und über lange Einsatzzeiten vermieden.

Der Ringkörper aus Teflon (eingetragenes Warenzeichen der Firma Dupont de Nemours), einem Polytetrafluoräthylen-Kunststoff (PTFE), dichtet unter der radialen Vorspannung durch den O-Ring zuverlässig in dem Dichtkontaktbereich ab, in dem relative axiale Bewegungen auftreten, und hat zusätzlich eine Stützringfunktion für den in dem anderen Dichtkontaktbereich statisch wirkenden O-Ring. Dank der radialen Vorspannung durch den O-Ring fungiert der verformte Dichtkragen des Ringkörpers als Gleitdichtung. Die nicht durch den O-Ring vorgespannte Ringscheibe lässt sich dauerhaft so genau einpassen, dass sie das Entstehen eines für den O-Ring kritischen Spalts vermeidet. Die materialbedingte Gleitfreudigkeit erlaubt eine leichtgängige Betätigung des Ventilstößels.

Ist der Dichtkragen im zweiten Dichtkontaktbereich nach innen auf die Umfangsfläche des Ventilstößels vorgespannt, dann erbringt der Ringkörper dort eine einwandfreie Abdichtung auch unter axialen Relativbewegungen. Hingegen verhindert die Ringscheibe des Ringkörpers außen das Entstehen des für den O-Ring kritischen Spalts, der in diesem ersten Dichtkontaktbereich ohne relative Axialbewegungen für die Abdichtung nach außen verantwortlich ist. Die Dichtvorrichtung ist eine einfach zu montierende Einheit.

Alternativ kann der Dichtkragen des Ringkörpers nach außen gegen die Umfangsfläche der Übermaßbohrung vorgespannt sein, so dass er auch bei axialen Relativbewegungen in diesem den Dichtkontaktbereich entlang der Umfangsfläche der Übermaßbohrung eine einwandfreie Dichtwirkung erbringt. Innenseitig, d.h. an der Umfangsfläche des Ventilstößels, verhindert die Ringscheibe des Ringkörpers das Entstehen eines für den O-Ring kritischen Spalts, der in diesem Dichtkontaktbereich ohne relative Axialbewegungen für die Abdichtung entlang der Umfangsfläche des Ventilstößels verantwortlich ist.

Bei jeder der beiden Ausführungsformen kommt die hervorragende Gleiteigenschaft des Teflons in dem Dichtkontaktbereich mit axialen Relativbewegungen insofern zum Tragen, als selbst bei hoher Passungsgüte und unter dem Vorspanndruck für die Abdichtungswirkung ein optimal kleiner Bewegungswiderstand für den Ventilstößel oder entlang der Umfangsfläche der Übermaßbohrung eintritt. Durch die Gleiteigenschaft des Teflons wird es somit erst ermöglicht, den Ventilstößel so eng zu fassen oder einen solchen Anpressdruck gegen die Umfangsfläche der Übermaßbohrung zu erzeugen, dass der in diesem Bereich radial vorgespannte Ringkörper trotz der Bewegungen des Ventilstößels oder entlang der Wand der Übermaßbohrung die erforderliche Abdichtung zu übernehmen vermag.

Zweckmäßigerweise ist der Ringkörper einstückig mit der Ringscheibe und dem davon abstehenden Dichtkragen aus Teflon ausgebildet. Der Dichtkragen sorgt dank der radialen Vorspannung für die direkte Abdichtung in dem Dichtkontaktbereich, in dem relative Axialbewegungen auftreten, und zwar entlang des Ventilstößels oder entlang der Umfangsfläche der Übermaßbohrung. Der O-Ring sitzt mit radialer Vorspannung auf oder in dem Dichtkragen, der den O-Ring von dem Dichtkontaktbereich separiert, in welchem axiale Relativbewegungen auftreten. Die Ringscheibe stützt den O-Ring in axialer Richtung und sorgt durch ihre strenge Passung dafür, dass kein für den O-Ring schädlicher Spalt entstehen kann. Auf diese Weise erbringt die Ringscheibe des Ringkörpers eine wünschenswerte Stützringfunktion für den O-Ring. Falls erforderlich, könnten auf dem Dichtkragen mehrere O-Ringe vorgesehen sein.

Eine gute Stützwirkung für den O-Ring, und ein gezielter Einsatz der radialen Vorspannung durch den O-Ring werden erreicht, wenn der Sitz eine Umfangsnut ist, in die der O-Ring satt passt. Zweckmäßigerweise ist die Umfangsnut bis in die Stirnfläche der Ringscheibe fortgesetzt, so dass kein Totraum entsteht, in welchem sich beispielsweise Luft sammeln könnte, die bei einem raschen Abbau hohen hydraulischen Drucks von 500 Bar oder mehr den O-Ring aus dem Sitz pressen könnte.

Zweckmäßigerweise besitzt die Stößelbohrung einen Passbohrungsabschnitt ausgerichtet auf den Sitz des O-Ringes. Der Passbohrungsabschnitt ist nur auf einen Teilbereich der Länge der Stößelbohrung begrenzt, damit die radiale Vorspannkraft des O-Ringes mit der Verformbarkeit zumindest des Dichtkragens zu einem hohen Anpressdruck und wirksamer direkter Abdichtung führen. Vor bzw. vor und hinter dem Passbohrungsabschnitt ist der Bohrungsdurchmesser der Stößelbohrung größer. Dadurch wird nicht nur die Leichtgängigkeit der Stößelbewegung gewährleistet, sondern lässt sich die Ringscheibe mit einer strengen Passung in die Übermaßbohrung einpassen oder auf den Ventilstößel aufpassen, um den für den O-Ring kritischen Spalt angrenzend an dessen Dichtkontaktbereich zu vermeiden und dennoch die leichtgängige Beweglichkeit in dem Dichtkontaktbereich zu gewährleisten, in welchem axiale Relativbewegungen auftreten müssen.

Der Ringkörper wird zweckmäßigerweise jeweils so eingesetzt, dass er mit seinem Dichtkragen zur Druckseite weist, damit der O-Ring unter Druck an der Ringscheibe abgestützt wird.

Für bestimmte Anwendungsfälle ist es zweckmäßig, einen mit seinem Dichtkragen nach innen vorgespannten Ringkörper und einen mit seinem Dichtkragen nach außen vorgespannten Ringkörper direkt hintereinander zu schalten, wobei der nach hinten vorgespannte Ringkörper stationär in der Übermaßbohrung und der nach außen vorgespannte Ringkörper stationär auf dem Ventilstößel angeordnet wird. Der O-Ring soll nämlich in seinem Dichtkontaktbereich ohne schädliche axiale Relativbewegungen abdichten, während der Ringkörper aus Teflon in seinem Dichtkontaktbereich auch dann zuverlässig abdichtet, wenn dort die notwendigen axialen Relativbewegungen auftreten.

Um über lange Gebrauchsdauer günstige Gleiteigenschaften sicherzustellen, sollte der Ringkörper aus veredeltem Teflon bestehen, vorzugsweise aus Teflon, das mit Bronze und/oder Glasfasern veredelt oder gemischt ist. Die Bronze trägt zur Verbesserung der Gleiteigenschaften bei. Die Glasfasern erhöhen die Gestaltfestigkeit des Ringkörpers.

Zweckmäßigerweise beträgt der Anteil an Bronze ca. 40 Gew.-% des Teflons.

In dem Sitzventil sollte der mit seinem Dichtkragen nach innen vorgespannte Ringkörper beim Stopfen positioniert sein oder sich sogar am Stopfen abstützen, der einen Abschluss nach außen bildet, damit er bei der Axialbewegung des Ventilstößels seine stationäre Position beibehält. Der Ringkörper dichtet am Ventilstößel direkt bei dessen Axialbewegungen ab, während der O-Ring ohne relative für die Abdichtung entlang der Umfangsfläche der Übermaßbohrung sorgt.

Anhand der Zeichnungen werden Ausführungsformen des Erfindungsgegenstandes erläutert. Es zeigen:
- Fig. 1: einen Axialschnitt eines Sitzventils mit einer erfindungsgemäßen Dichtvorrichtung im Stößeldurchgangsbereich,
- Fig. 2: eine ähnliche Schnittansicht einer weiteren Ausführungsform, in schematischer Darstellung,
- Fig. 3: einen Teil der Dichtvorrichtung in vergrößertem Maßstab,
- Fig. 4: eine Detailvariante, und
- Fig. 5: einen Längsschnitt eines Sitzventils mit einer herkömmlichen Dichtvorrichtung (Stand der Technik).

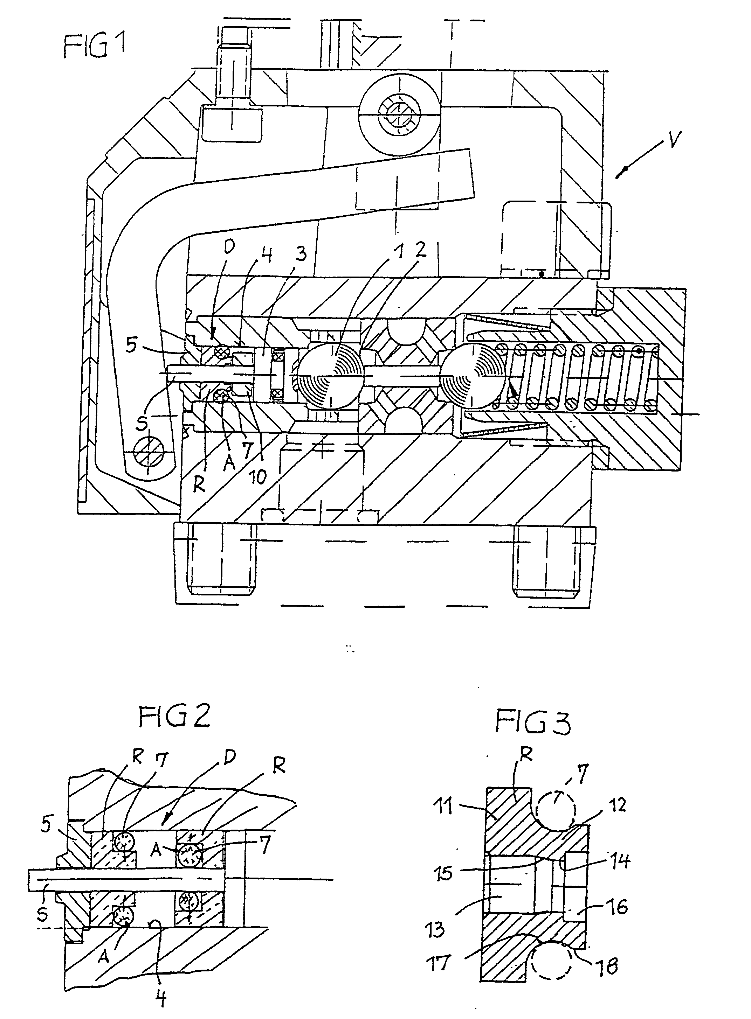

Das Sitzventil V der Fig. 4 (Stand der Technik) wurde bereits eingangs erläutert. Das Sitzventil der Fig. 1 mit der Dichtvorrichtung gemäß der Erfindung zeigt für mit Komponenten der Fig. 4 übereinstimmende Komponenten die gleichen Bezugszeichen.

Im Gehäuse G des Sitzventils V ist der Schließkörper 2 relativ zu dem ihm zugeordneten Ventilsitz 2 verstellbar. Zum Aufsetzen des Schließkörpers 1 auf den Ventilsitz 2 dient ein aus dem Gehäuse G nach außen geführter Ventilstößel, der in dem Stopfen 5 und mittels des Kolbens 3 axial beweglich in der Übermaßbohrung 4 geführt ist. Der Kolben 3 kontaktiert den Schließkörper 1. Der Stopfen 5 schließt die Übermaßbohrung 4 zur Gehäuseaußenseite ab. Zwischen dem Kolben 3 und dem Stopfen 5 ist in der Übermaßbohrung 4 die Dichtvorrichtung D angeordnet, deren Aufgabe es ist, Leckagen in zwei radial getrennten Dichtkontaktbereichen, nämlich entlang der Wand oder Umfangsfläche der Übermaßbohrung 4 und entlang der Umfangsfläche des Ventilstößels S nach außen aus dem Gehäuse 1 zu verhindern.

Bei der gezeigten Ausführungsform weist die Dichtvorrichtung D einen Ringkörper R aus Teflon (PTFE) auf, zweckmäßigerweise veredeltem Teflon mit einem Zusatz von Bronze und/oder Glasfasern, wobei ein Bronzegehalt von ca. 40 Gew.-% optimale Gleiteigenschaften für den Ventilstößel S gewährleistet, und eine gegebenenfalls vorgesehene Glasfaserverstärkung für hohe Gestaltfestigkeit des Ringkörpers R sorgt. Der Ringkörper R hat eine Stützringfunktion für einen elastischen Ring A, der hier ein O-Ring 7 mit einer Doppelfunktion ist. Einerseits hat der O-Ring 7 für die Abdichtung entlang der Wand der Übermaßbohrung 4 zu sorgen. In diesem Dichtkontaktbereich treten keine relativen Axialbewegungen auf. Andererseits erzeugt der O-Ring 7 eine radiale Vorspannung des Ringkörpers R nach innen zum Ventilstößel S, damit der Ringkörper R am Ventilstößel S selbst direkt für die innere Abdichtung zu sorgen vermag. In diesem Dichtkontaktbereich treten axiale Relativbewegungen auf. Ein Zwischenring 10 kann vorgesehen sein, um das Abgleiten des O-Ringes 7 zu verhindern und den Hub des Ventilstößels S zu begrenzen.

Bei der Ausführungsform in Fig. 2 weist die Dichtvorrichtung D zwei hintereinander gesetzte Ringkörper R aus Teflon und jeweils einen den Ringkörper R radial vorspannenden O-Ring 7 auf. Der in Fig. 2 linke Ringkörper R wird vom O-Ring 7 radial nach innen gegen den Ventilstößel S vorgespannt. Der in Fig. 2 rechte Ringkörper R wird von seinem O-Ring 7 radial nach außen gegen die Wand der Übermaßbohrung 4 vorgespannt Alternativ ist es möglich, in der Dichtvorrichtung zwei oder mehrere Ringkörper R mit der Ausbildung gemäß Fig. 1 hintereinander zu setzen.

In Fig. 3 ist der Ringkörper R, der durch den O-Ring 7 radial nach innen vorspannbar ist, in vergrößertem Maßstab gezeigt. Der Ringkörper R ist einstückig aus einer Ringscheibe 11 und einem davon in axialer Richtung vorstehenden Dichtkragen 12 gebildet. Die Ringscheibe 11 besitzt eine Stößelbohrung 13, die vom Dichtkragen 12 fortgesetzt wird. Am Außenumfang des Dichtkragens ist ein Sitz 17 für den O-Ring 7 geformt, zweckmäßigerweise eine gerundete Umfangsnut. Unterhalb des Sitzes 17 weist die Stößelbohrung 13 einen axial begrenzten Passbohrungsabschnitt 14 auf, dessen Innendurchmesser genau auf den Außendurchmesser des Ventilstößels S abgestimmt ist und der durch die radiale Vorspannung des O-Ringes 7 fest gegen den Umfang des Ventilstößels gepresst wird. Beiderseits des Passbohrungabschnittes 14 ist der Innendurchmesser der Stößelbohrung 13 größer ausgebildet Zweckmäßigerweise führt ein kegeliger Übergang zum Passbohrungsabschnitt 14, und ist am rechtsseitigen Ende eine Aufweitung 16 geformt. Dadurch kontaktiert der Ringkörper R den Ventilstößel vordringlich nur mit dem Passbohrungsabschnitt 14, der, da der Ringkörper R zumindest im Bereich des Dichtkragens 12 geringfügig radial verformbar ist, satt gegen den Ventilstößel S gepresst wird und für die direkte Abdichtung entlang des Ventilstößels S sorgt. Der Außendurchmesser der Ringscheibe 11 ist exakt auf den Innendurchmesser der Übermaßbohrung 4 abgestimmt, derart, dass die Ringscheibe 11 in einem Presssitz in die Übermaßbohrung 4 einbringbar ist, so dass zwischen dem Außenumfang der Ringscheibe 11 und der Wand der Übermaßbohrung 4 kein für den O-Ring 7 schädlicher Spalt entsteht und gegebenenfalls das Radialspiel in der Stößelbohrung 13 unterhalb der Ringscheibe 11 zu einer Verformung beim Einpressen der Ringscheibe 11 genutzt wird. Zur Sicherung des O-Rings 7 in seinem Sitz 17 ist eine erhabene Schulter 18 am Ende des Dichtkragens 12 geformt. Die den Sitz 17 bildende Umfangsnut hat eine dem Querschnitt des O-Rings angepasste Krümmung und ist, wie in Fig. 4 gezeigt, bis in die Stirnfläche der Ringscheibe 11 festgesetzt, um den in Fig. 3 gezeigten Totraum neben dem O-Ring 7 zu beseitigen.

Der O-Ring 7 ist in Fig. 1 mit Vorspannung auf den Dichtkragen 12 aufgeknüpft und spannt diesen Bereich des Ringkörpers R radial gegen den Ventilstößel S. Der Passbohrungsabschnitt 14 sorgt deshalb für eine direkte Gleitabdichtung entlang des Ventilstößels S. Gleichzeitig ist der Außendurchmesser der Ringscheibe 11 in die Übermaßbohrung 4 so eingepresst, dass kein Spalt entsteht. Der auch gegen die Wand der Übermaßbohrung 4 angepresste O-Ring 7 sorgt demzufolge für die Abdichtung entlang der Wand der Übermaßbohrung 4. wobei er sich an der Ringscheibe 11 abzustützen vermag. Das Material des Ringkörpers R, d.h. das veredelte Teflon, lässt trotz der einwandfreien Dichtwirkung eine relativ leichtgängige Bewegung des Ventilstößels S zu. Am O-Ring 7 treten dabei keine axialen Relativbewegungen auf.

In Fig. 2 ist der rechte Ringkörper R so ausgebildet, dass sein Dichtkragen 12 den Außendurchmesser der Ringscheibe 11 fortsetzt und den Sitz 17 für den O-Ring 7 innenseitig trägt. Außen auf dem Dichtkragen 12 kann bei dieser Ausführungsform ein in axialer Richtung begrenzter Passabschnitt entsprechend dem Passbohrungsabschnitt 14 geformt sein, der unter der radial nach außen wirkenden Vorspannung des O-Ringes 7 für die direkte Gleitabdichtung entlang der Wand der Übermaßbohrung 4 sorgt. Die Ringscheibe 11 ist hingegen mit einer sehr engen Passung auf den Ventilstößel S aufgepresst, so dass zwischen dem Ventilstößel S und der Stößelbohrung des Ringkörpers R kein Spalt entsteht, in den der in diesem Bereich abdichtende O-Ring 7 hineinfließen könnte. Zwischen dem O-Ring 7 und dem Ventilstößel S treten keine axialen Relativbewegungen auf.

## Patentansprüche

1. Sitzventil (V) für die Hochdruckhydraulik, mit einem Gehäuse, wenigstens einem relativ zu einem Ventilsitz (2) verstellbaren Schließkörper (1 ), und einem eine in einer zur Gehäuseaußenseite führenden Übermaßbohrung (4) angeordnete Dichtvorrichtung (D) durchsetzenden, axial beweglichen Ventilstößel (S), wobei in der Dichtvorrichtung (D) wenigstens ein Ringkörper (R) und ein O-Ring (A) zur Abdichtung in ersten und zweiten Dichtkontaktbereichen entlang einer Umfangsfläche des Ventilstößels und entlang einer Umfangsfläche der Übermaßbohrung vorgesehen sind, **dadurch gekennzeichnet, dass** der Ringkörper (R) eine als axialer Stützring für den O-Ring (A) wirkende Ringscheibe (11) und einen davon axial abstehenden Dichtkragen (14) aufweist, aus druckfestem und zumindest im Dichtkragen (14) geringfügig radial verformbarem Teflon besteht, dass der Dichtkragen (12) durch den O-Ring (A) radial vorgespannt ist, und dass die Ringscheibe (11) des Ringkörpers (R) angrenzend an den ersten Dichtkontaktbereich des O-Ringes mit einer zwischenspaltfreien, engen Passung an der jeweiligen Umfangsfläche anliegt.

2. Sitzventil nach Anspruch 1, **dadurch gekennzeichnet, dass** die Übermaßbohrung (4) zur Gehäuseaußenseite durch einen eingesetzten Stopfen (5) abgedeckt ist, und dass der Ringkörper (R) mit der Ringscheibe (11) angrenzend an den Stopfen (5) in die Übermaßbohrung (4) mit einer Presspassung eingepasst und der an der dem Stopfen (5) abgewandten Seite positionierte Dichtkragen (14) durch den O-Ring (A) im zweiten Dichtkontaktbereich nach innen auf die Umfangsfläche des Ventilstößels (S) radial vorgespannt ist.

3. Sitzventil nach Anspruch 1, **dadurch gekennzeichnet, dass** der Dichtkragen (12) des Ringkörpers (R) im zweiten Dichtkontaktbereich nach innen auf die Umfangsfläche des Ventilstößels (S) vorgespannt ist.

4. Sitzventil nach Anspruch 1, **dadurch gekennzeichnet, dass** der Dichtkragen (12) des Ringkörpers (R) im zweiten Dichtkontaktbereich nach außen gegen die Umfangsfläche der Übermaßbohrung (4) vorgespannt ist.

5. Sitzventil nach Anspruch 1, **dadurch gekennzeichnet, dass** der Ringkörper (R) im Axialschnitt die Ringscheibe (11) mit dem Innendurchmesser der Übermaßbohrung (4) entsprechendem Außendurchmesser und einer Stößelbohrung (13) aufweist, dass der axial orientierte ringförmige Dichtkragen (12) einstückig an der Ringscheibe (11) angeformt ist, und dass für den O-Ring (A) an dem Dichtkragen (12) ein Sitz (17) vorgesehen ist.

6. Sitzventil nach Anspruch 5, **dadurch gekennzeichnet, dass** der Sitz (17) eine Umfangsnut ist, vorzugsweise mit einem entsprechend dem Querschnitt des O-Rings (A) gerundeten Querschnitt, und dass sich die Umfangsnut vom Dichtkragen (12) bis in die angrenzende Stirnseite der Ringscheibe (11) erstreckt.

7. Sitzventil nach Anspruch 5, **dadurch gekennzeichnet, dass** die Stößelbohrung (13) ausgerichtet mit dem Sitz (17) einen axial begrenzten Passbohrungsabschnitt (14) aufweist, und dass der Bohrungsdurchmesser der Stößelbohrung (13) zumindest innerhalb der Ringscheibe (11) größer ist als im Passbohrungsabschnitt.

8. Sitzventil nach Anspruch 1, **dadurch gekennzeichnet, dass** der Ringkörper (R) mit seinem Dichtkragen (12) zur Druckseite der Dichtvorrichtung (D) weist.

9. Sitzventil nach Anspruch 1, **dadurch gekennzeichnet, dass** ein Ringkörper (R) mit nach innen vorgespanntem Dichtkragen (12) und ein Ringkörper mit nach außen vorgespanntem Dichtkragen (12) hintereinandergesetzt sind, wobei der nach innen vorgespannte Ringkörper stationär in der Übermaßbohrung (4) und der nach außen vorgespannte Ringkörper stationär auf dem Ventilstößel (S) positioniert ist.

10. Sitzventil nach Anspruch 1, **dadurch gekennzeichnet, dass** der Ringkörper (R) einstückig aus veredeltem Teflon besteht, vorzugsweise aus mit Bronze und/oder Glasfasern veredeltem bzw. vermischtem Teflon.

11. Sitzventil nach Anspruch 10, **dadurch gekennzeichnet, dass** das Teflon zwischen 30 Gew.-% und 60 Gew.-%, vorzugsweise um etwa 40 Gew.-%, Bronze enthält.

## Claims

1. Seat valve (V) for high-pressure hydraulics, having a housing, at least one closure body (1) which is adjustable relative to a valve seat (2), and an axially moveable valve lifter (S) which fits through a sealing device (D) arranged in an oversized bore (4) leading to the housing outer side, at least one annular body (R) and an O-ring (A) for sealing in first and second sealing-contact regions along a circumferential surface of the valve lifter and along a circumferential surface of the oversized bore being provided in the sealing device (D), **characterized in that** the annular body (R) has an annular disc (11) acting as an axial support ring for the O-ring (A) and a sealing collar (14) projecting axially therefrom, and consists of pressure-resistant Teflon which can be radially deformed to a slight extent at least in the sealing collar (14), **in that** the sealing collar (12) is radially prestressed by the O-ring (A), and **in that** the annular disc (11) of the annular body (R), adjacent to the first sealing-contact region of the O-ring, bears against the corresponding circumferential surface with . a tight fit without any gap in between.

2. Seat valve according to Claim 1, **characterized in that** the oversized bore (4) is covered with respect to the housing outer side by an inserted stopper (5), and **in that** the annular body (R) with the annular disc (11), adjacent to the stopper (5), is fitted into the oversized bore (4) with a press fit, and the sealing collar (14) positioned on the side remote from the stopper (5) is radially prestressed inwards onto the circumferential surface of the valve lifter (S) by the O-ring (A) in the second sealing-contact region.

3. Seat valve according to Claim 1, **characterized in that** the sealing collar (12) of the annular body (R) is prestressed inwards onto the circumferential surface of the valve lifter (S) in the second sealing-contact region.

4. Seat valve according to Claim 1, **characterized in that** the sealing collar (12) of the annular body (R) is prestressed outwards towards the circumferential surface of the oversized bore (4) in the second sealing-contact region.

5. Seat valve according to Claim 1, **characterized in that** the annular body (R), in axial section, includes the annular disc (11), having an external diameter which corresponds to the internal diameter of the oversized bore (4), and a lifter bore (13), **in that** the axially oriented annular sealing collar (12) is formed integrally on the annular disc (11), and **in that** a seat (17) is provided for the O-ring (A) on the sealing collar (12).

6. Seat valve according to Claim 5, **characterized in that** the seat (17) is a circumferential groove, preferably having a cross section which is rounded to match the cross section of the O-ring (A), and **in that** the circumferential groove extends from the sealing collar (12) as far as the adjoining end side of the annular disc (11).

7. Seat valve according to Claim 5, **characterized in that** the lifter bore (13), aligned with the seat (17), has an axially delimited locating bore section (14), and **in that** the bore diameter of the lifter bore (13) at least inside the annular disc (11) is greater than in the locating bore section.

8. Seat valve according to Claim 1, **characterized in that** the sealing collar (12) of the annular body (R) faces towards the pressure side of the sealing device (D).

9. Seat valve according to Claim 1, **characterized in that** an annular body (R) with an inwardly prestressed sealing collar (12) and an annular body with an outwardly prestressed sealing collar (12) are placed behind one another, with the inwardly prestressed annular body being located in a stationary position in the oversized bore (4) and the outwardly prestressed annular body being located in a stationary position on the valve lifter (S).

10. Seat valve according to Claim 1, **characterized in that** the annular body (R) consists integrally of enhanced Teflon, preferably of Teflon which has been mixed or enhanced with bronze and/or glass fibres.

11. Seat valve according to Claim 10, **characterized in that** the Teflon contains between 30% by weight and 60% by weight, preferably approximately 40% by weight, of bronze.

## Revendications

1. Soupape à siège (V) pour l'hydraulique haute pression, comportant un corps, au moins un obturateur (1) réglable par rapport à un siège de soupape (2), et un coulisseau de soupape (D) mobile axialement, traversant un dispositif d'étanchéité (D) disposé dans un perçage surdimensionné (4) menant au côté extérieur du corps, au moins un corps annulaire (R) et un joint torique (A) pour l'étanchéité dans une première et une seconde zones de contact étanche le long d'une surface périphérique du coulisseau de soupape et le long d'une surface périphérique du perçage surdimensionné étant prévus dans le dispositif d'étanchéité, **caractérisée en ce que** le corps annulaire (R) présente une rondelle annulaire (11) agissant en tant qu'anneau d'appui pour le joint torique (A) et une collerette d'étanchéité (14) écartée de celle-ci axialement, est constitué de Téflon résistant à la pression et légèrement déformable radialement au moins dans la collerette d'étanchéité (14), que la collerette d'étanchéité (12) est précontrainte radialement par le joint torique (A) et que, au voisinage de la première zone de contact d'étanchéité du joint torique, la rondelle annulaire (11) du corps annulaire (R) s'appuie de manière étroitement ajustée, sans interstice, contre la surface périphérique considérée.

2. Soupape à siège selon la revendication 1, **caractérisée en ce que** le perçage surdimensionné (4) vers le côté extérieur du corps est couvert par un bouchon (5) rapporté et que le corps annulaire (R) avec la rondelle annulaire (11) est emboîté au voisinage du bouchon (5) dans le perçage surdimensionné (4) avec ajustement serré, et la collerette d'étanchéité (14) positionnée sur le côté tourné à l'opposé du bouchon (5) est précontrainte radialement vers l'intérieur par le joint torique (A) dans la seconde zone de contact étanche sur la surface périphérique du coulisseau de soupape (S).

3. Soupape à siège selon la revendication 1, **caractérisée en ce que** la collerette d'étanchéité (12) du corps annulaire (R) est précontrainte, dans la deuxième zone de contact étanche, vers l'intérieur sur la surface périphérique du coulisseau de soupape (S).

4. Soupape à siège selon la revendication 1, **caractérisée en ce que** la collerette d'étanchéité (12) du corps annulaire (R) est précontrainte, dans la deuxième zone de contact étanche, vers l'extérieur contre la surface périphérique du perçage surdimensionné (4).

5. Soupape à siège selon la revendication 1, **caractérisée en ce que** le corps annulaire (R) présente en section axiale la rondelle annulaire (11) d'un diamètre extérieur correspondant au diamètre intérieur du perçage surdimensionné et d'un perçage de coulisseau (13), que la collerette d'étanchéité (12) de forme annulaire, orientée axialement, est formée d'un seul tenant sur la rondelle annulaire (11), et qu'un siège (17) est prévu sur la collerette d'étanchéité (12) pour le joint torique (A).

6. Soupape à siège selon la revendication 5, **caractérisée en ce que** le siège (17) est une rainure périphérique, de préférence présentant une section transversale arrondie correspondant à la section transversale du joint torique (A), et que la rainure périphérique s'étend de la collerette d'étanchéité (12) jusqu'à la face frontale adjacente de la rondelle annulaire (11).

7. Soupape à siège selon la revendication 5, **caractérisée en ce que** le perçage de coulisseau (13) aligné avec le siège (17) présente une section (14) de perçage ajustée, et que le diamètre de perçage du perçage de coulisseau (13), au moins à l'intérieur de la rondelle annulaire (11), est plus grand que dans la section de perçage ajustée.

8. Soupape à siège selon la revendication 1, **caractérisée en ce que** la collerette d'étanchéité (12) du corps annulaire (R) est tournée vers le côté de pression du dispositif d'étanchéité (D).

9. Soupape à siège selon la revendication 1, **caractérisée en ce qu'**un corps annulaire (R) présentant une collerette d'étanchéité (12) précontrainte vers l'intérieur et un corps annulaire présentant une collerette d'étanchéité (12) précontrainte vers l'extérieur sont placés l'un derrière l'autre, le corps annulaire précontraint vers l'intérieur étant positionné de manière stationnaire dans le perçage surdimensionné (4) et le corps annulaire précontraint vers l'extérieur de manière stationnaire sur le coulisseau de soupape (S).

10. Soupape à siège selon la revendication 1, **caractérisée en ce que** le corps annulaire (R) est constitué d'un seul tenant de Téflon traité, de préférence de Téflon traité ou mélangé avec du bronze et/ou des fibres de verre.

11. Soupape à siège selon la revendication 10, **caractérisée en ce que** le Téflon contient entre 30 % en poids et 60 % en poids, de préférence aux environs de 40 % en poids, de bronze.
